# EUROPEAN PATENT APPLICATION

(11) **EP 3 835 975 A1**
(43) Date of publication of application: **16.06.2021**
(21) Application number: 18929307.9
(22) Date of filing: 28.09.2018
(51) Int. Cl.: G06F 17/00, H04L 29/08

(54) **DATA TRANSMISSION METHOD AND DEVICE**

(30) Priority: 10.08.2018 CN 201810913710
(71) Applicant: Wangsu Science & Technology Co., Ltd., Shanghai 200030 (CN)
(72) Inventor: LIN, Binshu, Shanghai 200030 (CN); LIU, Huaming, Shanghai 200030 (CN)
(74) Representative: de Arpe Fernandez, Manuel
(86) International application number: PCT/CN2018/108238
(87) International publication number: WO 2020/029405

(57) **Abstract**

The present invention discloses a method and an apparatus for transmitting data. The method includes: obtaining a data transmitting instruction that points to a plurality of partition data associated with at least one transmitting data; determining target partition data that have already been stored in a local data pool from the plurality of partition data, where each target partition data includes at least one DataBatch; retrieving at least one target partition data in a current retrieval, where if at least two groups of target partition data are retrieved, a total number of the DataBatches in the at least two groups of the target partition data is smaller than or equal to a specified batch number threshold; and encapsulating the target partition data retrieved in the current retrieval into a data tuple and transmitting the data tuple to an initiator of the data transmitting instruction. The technical solution provided by the present application can improve the efficiency of data processing.

## Description

### FIELD OF THE DISCLOSURE

The present invention relates to the field of Internet technologies and, more particularly, relates to a method and an apparatus for transmitting data.

### BACKGROUND

As the amount of data on the Internet continues to grow, it is now often based on distributed systems to process large amount of network data. For example, as a distributed real-time big data processing system, Storm has a tremendous data processing capacity and is highly scalable. In case of increased load, Storm can maintain its performance by linearly adding resources.

In addition, Kafka is a distributed messaging system that stores logs persistently in disks. When storing data, Kafka may often classify the data in topics. At the same time, each data topic may include a plurality of partition data. The plurality of partition data may be grouped by the data topic and stored in partitions.

Currently, when a real-time big data processing platform is constructed, a system architecture of Storm-Kafka integration may often be utilized. Business data or business logs may be written to Kafka in real-time and Storm retrieves the data from Kafka to perform calculations. In practical applications, business scenarios may be complicated and flexible. Performing a business analysis may require retrieval of various types of business logs. Thus, a Storm system may often be required to retrieve data topics from multiple Kafka.

Businesses often have peak hours. Logs generated during peak hours may be substantially larger as compared to off-peak hours and may even be several times logs generated during comparable off-peak hours. In this case, when the Storm system retrieves the partition data of the multiple data topics, a processing program may run out of memory or process the data in a current retrieval substantially slowly due to a sudden surge of the amount of the data or a substantially large amount of the data retrieved in each retrieval, thereby lowering an efficiency of data processing.

### BRIEF SUMMARY OF THE DISCLOSURE

The objective of the embodiments of the present application is to provide a method and an apparatus for transmitting data to improve the efficiency of data processing.

To achieve the above objective, the present application provides a method for transmitting data. The method includes: obtaining a data transmitting instruction that points to a plurality of partition data associated with at least one transmitting data; determining target partition data that have already been stored in a local data pool from the plurality of partition data, wherein each target partition data includes at least one DataBatch; retrieving at least one target partition data in a current retrieval, wherein if at least two groups of target partition data are retrieved, a total number of the DataBatches in the at least two groups of the target partition data is smaller than or equal to a specified batch number threshold; and encapsulating the target partition data retrieved in the current retrieval into a data tuple and transmitting the data tuple to an initiator of the data transmitting instruction.

To achieve the above objective, the present application provides an apparatus for transmitting data. The apparatus includes: an instruction acquisition unit for obtaining a data transmitting instruction that points to a plurality of partition data associated with at least one transmitting data; a target partition data determination unit for determining target partition data that are stored in a local data pool from the plurality of partition data, wherein each target partition data includes at least one DataBatch; a data retrieval unit for retrieving at least one target partition data in a current retrieval, wherein if at least two groups of the target partition data are retrieved, a total number of the DataBatches in the at least two groups of the target partition data is be smaller than or equal to a specified batch number threshold; and a data transmitting unit for encapsulating the target partition data retrieved in the current retrieval into a data tuple and transmitting the data tuple to an initiator of the data transmitting instruction.

To achieve the above objective, the present application provides an apparatus for transmitting data. The apparatus includes: a memory for storing a computer program; and a processor for executing the computer program stored in the memory to implement the disclosed method.

It can be seen from the above description that the technical solution provided by the present application may specify in advance the partition data associated with each transmitting data. After the data transmitting instruction is received, the multiple partition data to be transmitted may be determined. Then, the local data pool may be searched first for the target partition data that have already been stored. The target partition data already stored in the local data pool may be retrieved and transmitted in multiple times. To ensure that an amount of data retrieved each time is not too large to cause memory overflow or data processing congestion, the upper limit of the number of the DataBatches in the partition data that are retrieved each time may be pre-defined. The upper limit of the number of the DataBatches may be seen as the specified batch number threshold. As such, when at least two groups of the target partition data are retrieved in the current retrieval, it is ensured that the total number of DataBatches in the multiple retrieved target partition data is smaller than or equal to the specified batch number threshold and the amount of retrieved data are not too large. In addition, if the total number of the DataBatches in the target partition data of one retrieval is greater than or equal to the specified batch number threshold, the target partition data may be retrieved and transmitted in a single retrieval. As such, on one hand, the retrieval of an excessive amount of data may be avoided. On the other hand, it is ensured that all the DataBatches in a same data partition are retrieved and transmitted in a same retrieval. A problem of data corruption due to data segmentation may be avoided. It can be seen from the above description that the technical solution provided by the present application may limit the amount of data in each retrieval. Thus, the problem of memory overflow or data processing congestion caused by retrieval of an excessive amount of data may be avoided and the efficiency of data processing may be improved.

### BRIEF DESCRIPTION OF THE DRAWINGS

In order to more clearly illustrate the technical solutions in the embodiments of the present disclosure, drawings used in the description of the embodiments will be briefly described below. Obviously, the drawings in the following description are only some embodiments of the present invention. Other drawings may also be obtained by those of ordinary skill in the art without inventive work.
FIG. 1 illustrates a schematic diagram of an exemplary system architecture according to disclosed embodiments;
FIG. 2 illustrates a flow chart of an exemplary method of transmitting data according to disclosed embodiments;
FIG. 3 illustrates a schematic diagram of traversal of an exemplary data packet according to disclosed embodiments;
FIG. 4 illustrates a schematic diagram of functional modules of an exemplary apparatus for transmitting data according to disclosed embodiments; and
FIG. 5 illustrates a schematic diagram of an exemplary apparatus for transmitting data according to disclosed embodiments.

### DETAILED DESCRIPTION

To make the objectives, technical solutions, and advantages of the present disclosure clearer, the following further describes the embodiments of the present disclosure in details with reference to the accompanying drawings.

### Embodiment One

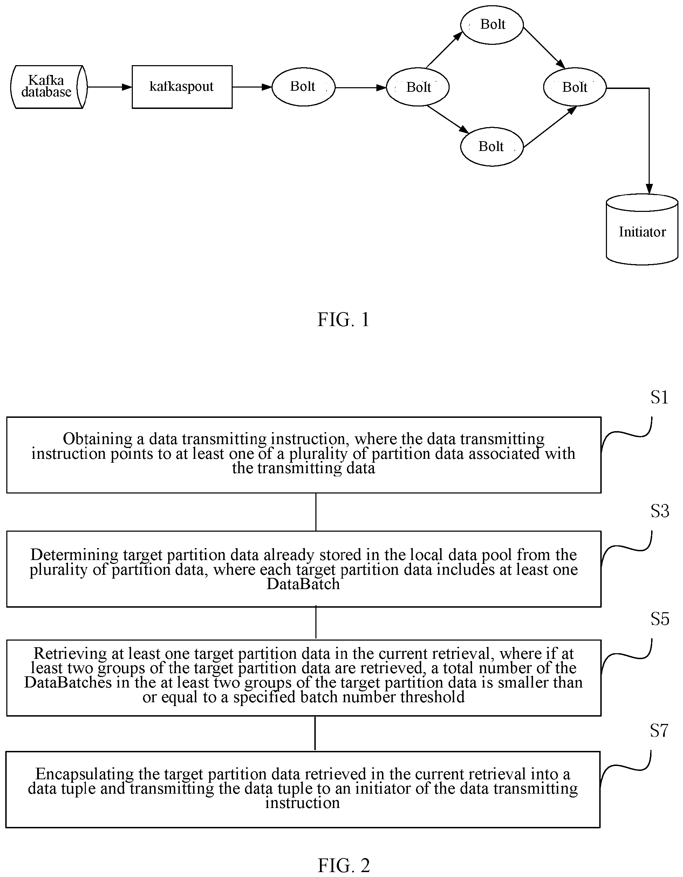

The present application provides a method for transmitting data. The method may be applied to a system architecture as shown in FIG. 1. The system architecture may include a pre-configured partition database, an apparatus for transmitting data, and a plurality of data processing nodes. The apparatus for transmitting data may retrieve partition data from the pre-configured partition database and store the partition data in a local data pool. Then, based on a received data transmitting instruction, the apparatus for transmitting data may retrieve the corresponding data from the local data pool and transmit the data to an initiator of the data transmitting instruction after being processed at the plurality of data processing nodes. In practical applications, the pre-configured partition database may be a Kafka database, the apparatus for transmitting data may be a kafkaspout, and each of the plurality of data processing nodes may be a bolt.

Specifically, referring to FIG. 2, the method for transmitting data provided by the present application may include the following steps.

S1: obtaining a data transmitting instruction, where the data transmitting instruction points to at least one of a plurality of partition data associated with the transmitting data.

In one embodiment, a Storm system may have separate data retrieval and data transmittal processes for each transmitting data. When a kafkaspout is initialized, each transmitting data may be assigned with corresponding partition data (Partition) in advance. Subsequently, each transmitting data may perform the data retrieval and data transmittal processes based on the assigned partition data. Specifically, the partition data may be grouped in data topics. When the kafkaspout is initialized, the partition information of each data topic may be retrieved. Each data topic may include a plurality of partition data. Partition information may include an identifier of the data topic and identifiers of multiple partition data in the data topic. For example, there are two data topics. The identifiers for the two data topics may be 0 and 1, respectively. Each data topic may include 10 partition data. The identifiers for the 10 partition data in the first data topic may be numbers from 0 to 9. The identifiers for the 10 partition data in the second data topic may be numbers from 10 to 19. In this case, the partition information for the first data topic may be a combination of numbers 0:0, 0: 1, 0:5, etc. The first number represents the data topic identifier. The second number represents the partition data identifier.

In one embodiment, after the partition information for each data topic is retrieved, the partition information in each data topic may be sorted according to the data topic identifiers and the partition data identifiers. In sorting result, the sorting process may initially sort the partition information according to the data topic identifiers. Within the same data topic, the sorting process may subsequently sort the partition information according to a sequence of the identifiers of the partition data. Each current transmitting data may also have an index identifier. The index identifier may be a number ascending from 0. For example, an index identifier for the first transmitting data may be 0, and an index identifier for the second transmitting data may be 1. Then, a specified partition may be selected from the sorted partition information based on its index identifier and the specified partition data may be assigned to the current transmitting data source. For example, there are two data topics with identifiers 0 and 1. Each of the two data topics may include 10 groups of partition data. The identifiers for the partition data in the first data topic may be from 0 to 9. The identifiers for the partition data in the second data topic may be from 10 to 19. Assuming there are 10 current transmitting data. Each transmitting data may be assigned with two partition data. The first transmitting data with an index identifier 0 may be assigned with the partition data with the identifiers 0 and 10. Correspondingly, the second transmitting data with an index identifier 1 may be assigned with the partition data with the identifiers 1 and 11. So on and so forth until the assignment of the partition data is completed. As such, different transmitting data may be associated with different partition data.

In one embodiment, when transmitting data, the kafkaspout may receive a data transmitting instruction, which carries the identifier of each partition data to be transmitted and the identifier of the data topic that the partition data belong to. As such, the kafkaspout may know the partition data pointed by the data transmitting instruction by analyzing the data transmitting instruction.

S3: determining target partition data already stored in the local data pool from the plurality of partition data, where each target partition data includes at least one DataBatch.

In one embodiment, the kafkaspout may include a local data pool for storing data retrieved from a Kafka database. The plurality of partition data to be transmitted may first be searched in the local data pool to determine whether the local data pool includes some or all of the plurality of partition data. Thus, the target partition data already stored in the local data pool may be determined from the plurality of partition data. The target partition data may be divided into groups based on the DataBatches and data belonging to a same data partition may not be divided into different DataBatches. Thus, each target partition data may include at least one DataBatch.

S5: retrieving at least one target partition data in the current retrieval, where if at least two groups of the target partition data are retrieved, a total number of the DataBatches in the at least two groups of the target partition data is smaller than or equal to a specified batch number threshold.

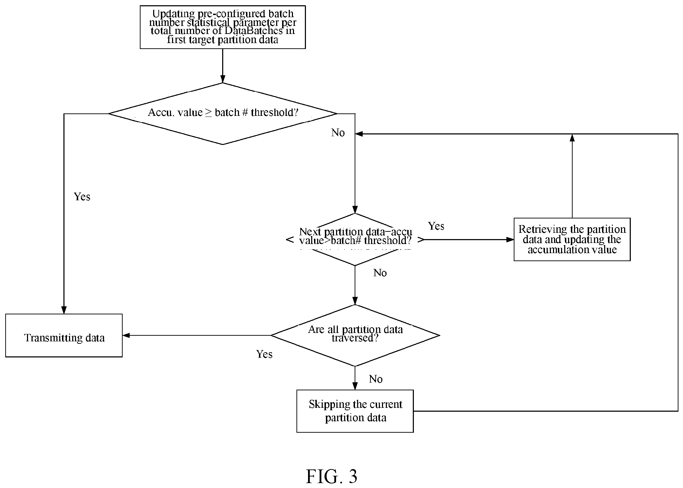

In one embodiment, the target partition data may be retrieved from the local data pool in multiple retrievals. To ensure that an amount of data retrieved each time is not too large, the amount of the data retrieved each time may be pre-defined. Specifically, a specified batch number threshold may be pre-configured. The specified batch number threshold may be used as an upper limit of the total number of the DataBatches retrieved each time. Referring to FIG. 3, taking the current retrieval as an example, an attempt may be made to sequentially retrieve each target partition data. For the first target partition data in the current retrieval, the kafkaspout may recognize the total number of the DataBatches included in the first target partition data and update an accumulation value of the pre-configured batch number statistical parameter based on the recognized total number. The pre-configured batch number statistical parameter may be used to count the total number of the DataBatches that have already been retrieved in the current retrieval. The parameter may have an initial value 0 and may only be applicable to the current retrieval. If the current retrieval is completed, the parameter may be reset to 0. For the first target partition data, the corresponding total number of the DataBatches may be directly written to the parameter. The updated accumulation value may be compared with the specified batch number threshold to determine a size relationship. If the updated accumulation value is smaller than the specified batch number threshold, it indicates that the total number of the DataBatches in the current retrieval has not reached the upper limit. Thus, the current retrieval may continue to retrieve more DataBatches. At this point, the kafkaspout may retrieve the remaining DataBatches in the first target partition data and an attempt to retrieve other target partition data stored in the local data pool may start. However, if the updated accumulatio value is greater than or equal to the specified batch number threshold, it indicates that no more DataBatches may be retrieved in the current retrieval. At this point, the first target partition data may be the only target partition data retrieved in the current retrieval and data retrieving process of the current retrieval may be ended.

As shown in FIG. 3, when the updated accumulation value is smaller than the specified batch number threshold, a subsequent target partition data may be traversed. The subsequent target partition data may become the current target partition data. A sum of the total number of the DataBatches included in the current target partition data and the accumulation value of the pre-configured batch number statistical parameter may be calculated. At this point, the pre-configured batch number statistical parameter may record the total number of DataBatches in the first target partition data. As such, the calculation result may be the total number of the DataBatches in the first target partition data and the current target partition data. It should be noted that calculating the sum of the two values does not update the pre-configured batch number statistical parameter with the total number of the DataBatches included in the current target partition data. At this point, if the calculation result is greater than the specified batch number threshold, it indicates that if all the DataBatches in the current target partition data are retrieved, the amount of data retrieved may be too large. To ensure that the DataBatches in a same target partition data are retrieved all in one retrieval, the current target partition data may be skipped, and a subsequent target partition data may be traversed. Similarly, if the sum of the total number of DataBatches included in the subsequent target partition data and the total number of the DataBatches in the first target partition data is greater than the specified batch number threshold, the target partition data may skipped again until the calculation result is smaller than or equal to the specified batch number threshold.

In one embodiment, if the calculation result for the current target partition data is smaller than the specified batch number threshold, it indicates that the upper limit of the amount of retrieved data may not be exceeded if all the DataBatches in the current target partition data are retrieved. At this point, after the first target partition data are retrieved, the DataBatches in the current target partition data may be retrieved. The total number of the DataBatches included in the current target partition data may be used to update the accumulation value of the pre-configured batch number statistical parameter. Then, the above process may be repeated to traverse subsequent target partition data until all the target partition data are traversed.

S7: encapsulating the target partition data retrieved in the current retrieval into a data tuple and transmitting the data tuple to an initiator of the data transmitting instruction.

In one embodiment, after the traversal of the target partition data in the local data pool is completed, the DataBatches in the current retrieval may be encapsulated into the data tuple and the data tuple may be transmitted to the initiator of the data transmitting instruction. After the retrieval and transmittal of the DataBatches in the current retrieval are completed, the same process may be repeated for the retrieval and transmittal of the DataBatches in a subsequent retrieval.

In one embodiment, after the data tuple is transmitted to the initiator of the data transmitting instruction, the partition information corresponding to the target partition data in the current retrieval and a data offset associated with the partition information may be recorded. The partition information corresponding to the target partition data may include the identifier of the data topic that the target partition data belong to and the identifiers of the target partition data. In addition, the data offset may point to an ending position of the data that have already been retrieved. As such, when the partition data are retrieved from the local data pool in a subsequent retrieval, the data retrieval may start directly from the position indicated by the data offset. Thus, no data may be omitted or duplicated. In practical applications, the Storm system may include a central management system ZooKeeper. The partition information corresponding to the target partition data and the data offset associated with the partition information may be written to the ZooKeeper. The data stored in the ZooKeeper may be accessed in the subsequent data retrieval and the corresponding data offset may be obtained. It should be noted that, in practical applications, the corresponding partition information may not be written to the ZooKeeper every time the target partition data are transmitted. Instead, the partition information corresponding to the target partition data and the data offset associated with the partition information may be written to the ZooKeeper only after it is confirmed that all the transmitted data of the current retrieval have already been successfully processed.

In one embodiment, a portion of the partition data to be transmitted may not be stored in the local data pool. At this point, the kafkaspout need to retrieve the corresponding partition data from a pre-configured partition database, i.e., a Kafka database, to store into the local data pool and may then transmit the data from the local data pool. Specifically, for the partition data that are not stored in a local resource pool, the kafkaspout may first obtain a data offset and a data size of the partition data that are not stored in the local resource pool. The data offset may indicate a starting position of the data and the data size may indicate an amount of the data to be retrieved from the starting position. In practical applications, if the kafkaspout retrieves the data from the pre-configured partition database for the first time, the data offset of the partition data may be stored in the pre-configured partition database. At this point, a pre-configured parameter may be used to retrieve the data offset corresponding to the partition data that are not stored locally from the pre-configured partition database. The pre-configured parameter may indicate an address of the data offset recorded in the Kafka database.

In addition, if it is not the first time that the kafkaspout retrieves the data from the pre-configured partition database, it indicates that a portion of the partition data have been retrieved previously from the Kafka database and stored in the local data pool and the target partition data in the local data pool have provided to an initiator of a data acquisition request. At this point, the data offset after the previously retrieved data have been processed may be recorded in ZooKeeper's memory. Thus, in this case, the kafkaspout may retrieve the data offset corresponding to the partition data that are not stored locally directly at the address specified in ZooKeeper's memory. After the data offset and the data size are retrieved, the kafkaspout may retrieve the data specified in the data size from the pre-configured partition database starting from the position indicated by the data offset. The retrieved data may be divided into DataBatches according to a certain data granularity. Finally, the divided DataBatches may be stored in the local resource pool of the kafkaspout according to the partition data that the DataBatches belong to. After the divided DataBatches are stored in the local resource pool according to the partition data that the DataBatches belong to, the kafkaspout may also record the data offset of the DataBatches according to the partition data that the DataBatches belong to. The recorded data offset may be used later to retrieve the DataBatches in the partition data from the local resource pool.

In one embodiment, to ensure that no redundant partition data are stored on the local data pool, the kafkaspout may not retrieve the data from the pre-configured partition database until all the data retrieved from the pre-configured partition database in the current retrieval have been transmitted.

### Embodiment Two

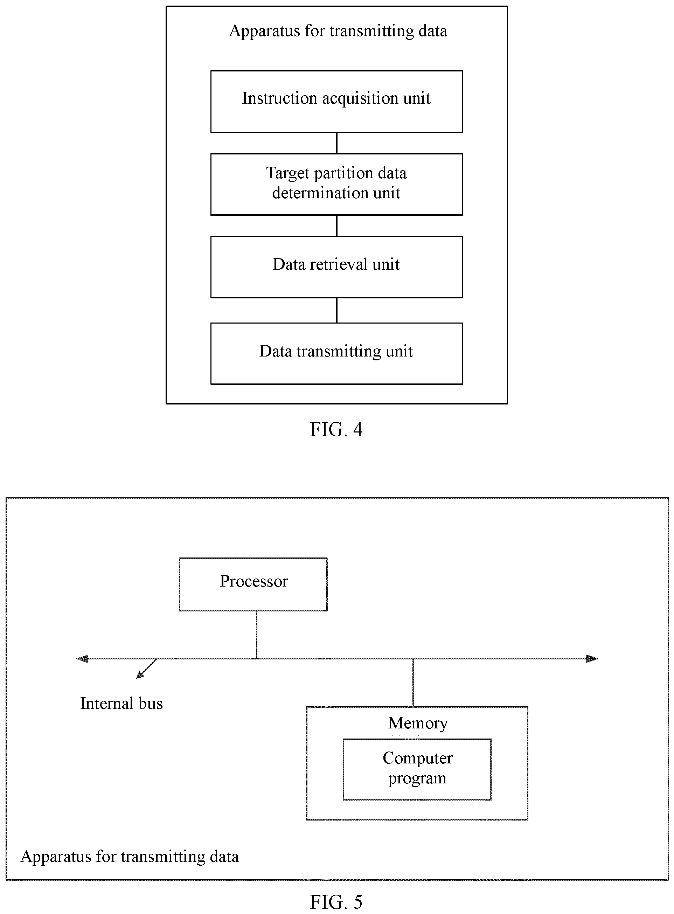

Referring to FIG. 4, the present application also provides an apparatus for transmitting data. The apparatus may include an instruction acquisition unit, a target partition data determination unit, a data retrieval unit, and a data transmitting unit. The instruction acquisition unit may be used to obtain a data transmitting instruction. The data transmitting instruction may point to a plurality of partition data associated with at least one transmitting data. The target partition data determination unit may be used to determine target partition data that are stored in a local data pool from a plurality of partition data. Each target partition data may include at least one DataBatch. The data retrieval unit may be used to retrieve at least one target partition data in a current retrieval. If at least two groups of the target partition data are retrieved, a total number of the DataBatches in the at least two groups of the target partition data may be smaller than or equal to a specified batch number threshold. The data transmitting unit may be used to encapsulate the target partition data retrieved in the current retrieval into a data tuple and transmit the data tuple to an initiator of the data transmitting instruction.

In one embodiment, the target partition data determination unit may include a first retrieval module, a conditional retrieval module, and a traversal module. The first retrieval module may be used to update an accumulation value of a pre-configured batch number statistical parameter according to a total number of DataBatches included in the first target partition data. The conditional retrieval module may be used to retrieve the DataBatches in the first target partition data and traverse other target partition data stored in the local data pool if the updated accumulation value is smaller than the specified batch number threshold. The traversal module may be used to calculate a sum of the total number of the DataBatches included in the current target partition data and the accumulation value of the pre-configured batch number statistical parameter. If the calculation result is greater than the specified batch number threshold, the traversal module may continue to traverse subsequent target partition data. If the calculation result is smaller than or equal to the specified batch number threshold, the traversal module may retrieve the DataBatches in the current target partition data, update the accumulation value of the pre-configured batch number statistical parameter according to the total number of the DataBatches included in the current target partition data, and continue to traverse subsequent target partition data.

Correspondingly, the data transmitting unit may be used to encapsulate the target partition data retrieved in the current retrieval into a data tuple and transmit the data tuple to the initiator of the data transmitting instruction after the traversal of the target partition data in the local data pool is completed.

In one embodiment, the target partition data determination unit may also include a single retrieval module for retrieving only the first target partition data in the current retrieval and ending a data retrieval process of the current retrieval if the updated accumulation value is greater than or equal to the specified batch number threshold.

In one embodiment, the apparatus may also include an unstored data information acquisition unit and a partition data retrieval unit. The unstored data information acquisition unit may be used to obtain a data offset and a data size of unstored partition data that are not stored in a local resource pool. The partition data retrieval unit may be used to retrieve the data specified in the data size from the pre-configured partition database starting from the position indicated by the data offset, divide the retrieved data into DataBatches, and store the divided DataBatches in the local resource pool according to the partition data that the DataBatches belong to.

Referring to FIG. 5, the present application also provides another apparatus for transmitting data. The apparatus may include a memory and a processor. The memory may be used to store a computer program. The processor may be used to execute the computer program to implement the previously disclosed method for transmitting data.

It can be seen from the above description that the technical solution provided by the present application may specify in advance the partition data associated with each transmitting data. After the data transmitting instruction is received, the partition data to be transmitted may be determined. Then, the local data pool may be searched first for the target partition data that have already been stored. The target partition data already stored in the local data pool may be retrieved and transmitted in multiple times. To ensure that an amount of data retrieved each time is not too large to cause memory overflow or data processing congestion, the upper limit of the number of the DataBatches in the partition data that are retrieved each time may be pre-defined. The upper limit of the number of the DataBatches may be called the specified batch number threshold. As such, when at least two groups of the target partition data are retrieved in the current retrieval, it is ensured that the total number of DataBatches in the multiple retrieved target partition data is smaller than or equal to the specified batch number threshold and the amount of retrieved data are not too large. In addition, if the total number of the DataBatches in the target partition data of one retrieval is greater than or equal to the specified batch number threshold, the target partition data may be retrieved and transmitted in a single retrieval. As such, on one hand, the retrieval of an excessive amount of data may be avoided. On the other hand, it is ensured that all the DataBatches in a same data partition are retrieved and transmitted in a same retrieval. A problem of data corruption due to data segmentation may be avoided. It can be seen from the above description that the technical solution provided by the present application may limit the amount of data in each retrieval. Thus, the problem of memory overflow or data processing congestion caused by retrieval of an excessive amount of data may be avoided and the system stability in the process of data processing may be improved.

Through the description of the above embodiments, those skilled in the art may clearly understand that the embodiments may be implemented in software on a general-purpose hardware platform or implemented in hardware. Based on such understanding, the above described technical solution or the contribution beyond the existing technology may be embodied in the form of software product. The software product may be stored in a computer readable storage medium such as a ROM/RAM, a magnetic disk, or an optical disk, etc. The software product may include program instructions to be executed by a computer (e.g., a personal computer, a server, or a network device, etc.) to implement various method embodiments or portions of various method embodiments.

It should be understood by those skilled in the art that the foregoing are merely certain preferred embodiments of the present invention and are not intended to limit the present invention. Without departing from the spirit and principles of the present invention, any modifications, equivalent substitutions, and improvements, etc. shall fall within the scope of the present invention.

## Claims

1. A method for transmitting data, comprising:
obtaining a data transmitting instruction that points to a plurality of partition data associated with at least one transmitting data;
determining target partition data that have already been stored in a local data pool from the plurality of partition data, wherein each target partition data includes at least one DataBatch;
retrieving at least one target partition data in a current retrieval, wherein if at least two groups of target partition data are retrieved, a total number of the DataBatches in the at least two groups of the target partition data is smaller than or equal to a specified batch number threshold; and
encapsulating the target partition data retrieved in the current retrieval into a data tuple and transmitting the data tuple to an initiator of the data transmitting instruction.

2. The method of claim 1, wherein establishing an association relationship between the partition data and the transmitting data includes:
upon initialization, retrieving partition information of a data topic, wherein the data topic includes multiple partition data and the partition information includes an identifier of the data topic and identifiers of all the partition data in the data topic;
sorting the partition information in the data topic according to the identifier of the data topic and the identifiers of the partition data; and
obtaining an index identifier of current transmitting data, selecting specified partition data from the sorted partition information according to the index identifier, and assigning the specified partition data as the current transmitting data.

3. The method of claim 1, wherein retrieving the at least one target partition data in the current retrieval includes:
updating an accumulation value of a pre-configured batch number statistical parameter according to the total number of the DataBatches included in first target partition data in the current retrieval;
if the updated accumulation value is smaller than the specified batch number threshold, retrieving the DataBatches in the first target partition data and traversing other target partition data in the local data pool;
for current target partition data in a process of traversing, calculating a sum of the total number of the DataBatches included in the current target partition data and the accumulation value of the pre-configured batch number statistical parameter, if the calculation result is greater than the specified batch number threshold, continuing to traverse subsequent target partition data; if the calculation result is smaller than or equal to the specified batch number threshold, retrieving the DataBatches in the current target partition data, updating the accumulation value of the pre-configured batch number statistical parameter according to the total number of the DataBatches included in the current target partition data, and continuing to traverse subsequent target partition data; and
correspondingly, after the traversal of the target partition data in the local data pool is completed, encapsulating the target partition data retrieved in the current retrieval into the data tuple and transmitting the data tuple to the initiator of the data transmitting instruction.

4. The method of claim 3, further including:
if the updated accumulation value is greater than or equal to the specified batch number threshold, retrieving only the first target partition data in the current retrieval and ending a data retrieval process of the current retrieval.

5. The method of claim 1, wherein after transmitting the data tuple to the initiator of the data transmitting instruction, the method further includes:
recording the partition information corresponding to the target partition data transmitted in the current retrieval and a data offset associated with the partition information, wherein the partition information corresponding to the target partition data includes the identifier of the data topic that the target partition data belong to and the identifiers of the target partition data, and when retrieving the partition data in a local resource pool in a subsequent retrieval, starting to retrieve the data from a position indicated by the data offset.

6. The method of claim 1, further including:
for the partition data that are not stored in the local resource pool, obtaining a data offset and a data size of the partition data that are not stored in the local resource pool; and
retrieving the data specified in the data size from a pre-configured partition database starting from the position indicated by the data offset, dividing the retrieved data into multiple DataBatches, and storing the divided DataBatches in the local resource pool according to the partition data that the DataBatches belong to.

7. The method of claim 6, wherein obtaining the data offset of the partition data includes:
if it is the first time that the data are retrieved from the pre-configured partition database, retrieving the data offset corresponding to the partition data that are not stored locally from the pre-configured partition database according to a pre-configured parameter; and
if it is not the first time that the data are retrieved from the pre-configured partition database, retrieving the data offset corresponding to the partition data that are not stored locally from a specified address of a memory.

8. The method of claim 6, after storing the divided DataBatches in the local resource pool according to the partition data that the DataBatches belong to, the method further includes:
recording the data offset of the divided DataBatches according to the partition data that the DataBatches belong to, such that the DataBatches in the partition data are retrieved from the local resource pool based on the recorded data offset.

9. The method of claim 6, after storing the divided DataBatches in the local resource pool according to the partition data that the DataBatches belong to, the method further includes:
before all the data retrieved from the pre-configured partition database in the current retrieval are transmitted, retrieving no more data from the pre-configure partition database.

10. An apparatus for transmitting data, comprising:
an instruction acquisition unit for obtaining a data transmitting instruction that points to a plurality of partition data associated with at least one transmitting data;
a target partition data determination unit for determining target partition data that are stored in a local data pool from the plurality of partition data, wherein each target partition data includes at least one DataBatch;
a data retrieval unit for retrieving at least one target partition data in a current retrieval, wherein if at least two groups of the target partition data are retrieved, a total number of the DataBatches in the at least two groups of the target partition data is be smaller than or equal to a specified batch number threshold; and
a data transmitting unit for encapsulating the target partition data retrieved in the current retrieval into a data tuple and transmitting the data tuple to an initiator of the data transmitting instruction.

11. The apparatus of claim 10, the target partition data determination unit includes:
a first retrieval module for updating an accumulation value of a pre-configured batch number statistical parameter according to a total number of DataBatches included in first target partition data in the current retrieval;
a conditional retrieval module for retrieving the DataBatches in the first target partition data and traversing other target partition data stored in the local data pool if the updated accumulation value is smaller than the specified batch number threshold;
a traversal module for calculating a sum of the total number of the DataBatches included in current target partition data and the accumulation value of the pre-configured batch number statistical parameter in a process of traversing the current target partition data, wherein if a calculation result is greater than the specified batch number threshold, the traversal module continues to traverse subsequent target partition data, and if the calculation result is smaller than or equal to the specified batch number threshold, the traversal module retrieves the DataBatches in the current target partition data, updates the accumulation value of the pre-configured batch number statistical parameter according to the total number of the DataBatches included in the current target partition data, and continues to traverse subsequent target partition data; and
correspondingly, after the traversal of the target partition data in the local data pool is completed, the data transmitting unit encapsulates the target partition data retrieved in the current retrieval into the data tuple and transmits the data tuple to the initiator of the data transmitting instruction.

12. The apparatus of claim 11, the target partition data determination unit further includes:
a single retrieval module for retrieving only the first target partition data in the current retrieval and ending a data retrieval process of the current retrieval if the updated accumulation value is greater than or equal to the specified batch number threshold.

13. The apparatus of claim 10, further including:
an unstored data information acquisition unit for obtaining a data offset and a data size of unstored partition data that are not stored in a local resource pool; and
a partition data retrieval unit for retrieving the data specified in the data size from a pre-configured partition database starting from a position indicated by the data offset, dividing the retrieved data into multiple DataBatches, and storing the divided DataBatches in the local resource pool according to the partition data that the DataBatches belong to.

14. An apparatus for transmitting data, comprising:
a memory for storing a computer program; and
a processor for executing the computer program stored in the memory to implement the method of any of claims 1-9.
